# EUROPEAN PATENT APPLICATION

(11) **EP 3 690 542 A1**
(43) Date of publication of application: **05.08.2020**
(21) Application number: 18862327.6
(22) Date of filing: 31.08.2018
(51) Int. Cl.: G02F 1/155

(54) **ELECTROCHROMIC DIMMING MEMBER, LIGHT-TRANSMITTING CONDUCTIVE GLASS FILM AND ELECTROCHROMIC DIMMING ELEMENT**

(30) Priority: 29.09.2017 JP 2017191106
(71) Applicant: Nitto Denko Corporation, Ibaraki-shi, Osaka 567-8680 (JP)
(72) Inventor: SUGINO Akiko, Ibaraki-shi Osaka 567-8680 (JP); FUJINO Nozomi, Ibaraki-shi Osaka 567-8680 (JP); WATANABE Kenta, Ibaraki-shi Osaka 567-8680 (JP); MURASHIGE Takeshi, Ibaraki-shi Osaka 567-8680 (JP)
(74) Representative: Grünecker Patent- und Rechtsanwälte PartG mbB
(86) International application number: PCT/JP2018/032372
(87) International publication number: WO 2019/065080

(57) **Abstract**

Provided are an electrochromic light adjusting member excellent in terms of low resistance and flexibility, a light transmitting electrically conductive glass film to be used for the electrochromic light adjusting member, and an electrochromic light adjusting element including the electrochromic light adjusting member. The electrochromic light adjusting member includes in this order: a glass film; a light transmitting electrically conductive layer; and an electrochromic light adjusting layer, wherein the light transmitting electrically conductive layer includes a first indium-based electrically conductive oxide layer, a metal layer, and a second indium-based electrically conductive oxide layer in the stated order from a glass film side.

## Description

### Technical Field

The present invention relates to an electrochromic light adjusting member, a light transmitting electrically conductive glass film, and an electrochromic light adjusting element.

### Background Art

Hitherto, there has been known an electric current-driven light adjusting apparatus using an electrochromic material that undergoes a change in light transmission amount, color, or the like through an electrochemical redox reaction. For example, there is a proposal of an electrochromic element including a working electrode sheet, a counter electrode sheet, an electrochromic compound, and an electrolyte, in which the working electrode sheet includes a glass sheet and a transparent electrically conductive oxide film (see, for example, Patent Literature 1). In the electrochromic element of Patent Literature 1, a single layer formed of a crystalline ITO film is used as the transparent electrically conductive oxide film.

### Citation List

### Patent Literature

[PTL 1] JP 2015-172666 A

### Summary of Invention

### Technical Problem

In the electrochromic element, from the viewpoints of an improvement in responsiveness of the electrochromic compound, energy conservation, and the like, it is required that the surface resistance value of an electrode substrate, such as the working electrode sheet, be lowered (resistance reduction). As a method for resistance reduction, a method involving increasing the thickness of the ITO film is considered.

However, when the thickness of the ITO film is increased, a crack is liable to occur upon bending of the electrode substrate. The electrochromic element is electric current-driven, and hence, when a crack occurs in the electrode substrate, the redox of the electrochromic compound at the cracked portion is inhibited, resulting in a defect in that a light adjusting function is markedly reduced. Specifically, for example, uniformity at the time of coloration or decoloration is reduced, resulting in color unevenness in some cases. In addition, an electrochromic element in which the ITO film has an increased thickness has low transparency, and hence is not preferred for an application such as a light adjusting window.

An object of the present invention is to provide an electrochromic light adjusting member excellent in terms of low resistance and flexibility, a light transmitting electrically conductive glass film to be used for the electrochromic light adjusting member, and an electrochromic light adjusting element including the electrochromic light adjusting member.

### Solution to Problem

According to one embodiment of the present invention, there is provided an electrochromic light adjusting member, including in this order: a glass film; a light transmitting electrically conductive layer; and an electrochromiclight adjusting layer, wherein the light transmitting electrically conductive layer includes a first indium-based electrically conductive oxide layer, a metal layer, and a second indium-based electrically conductive oxide layer in the stated order from a glass film side.

In one embodiment, the light transmitting electrically conductive layer has a surface resistance value of 50 Ω/□ or less.

In one embodiment, the first indium-based electrically conductive oxide layer and the second indium-based electrically conductive oxide layer are each an amorphous film.

In one embodiment, the glass film has a thickness of from 20 µm to 200 µm.

According to another embodiment of the present invention, there is provided a light transmitting electrically conductive glass film. The light transmitting electrically conductive glass film includes: a glass film; and a light transmitting electrically conductive layer arranged on one side of the glass film, wherein the light transmitting electrically conductive layer includes a first indium-based electrically conductive oxide layer, a metal layer, and a second indium-based electrically conductive oxide layer in the stated order from a glass film side.

In one embodiment, the light transmitting electrically conductive glass film is used for the electrochromic light adjusting member.

According to still another embodiment of the present invention, there is provided an electrochromic light adjusting element. The electrochromic light adjusting element includes: the electrochromic light adjusting member; and an electrode substrate, wherein the electrode substrate is arranged on an electrochromic light adjusting layer side of the electrochromic light adjusting member.

### Advantageous Effects of Invention

The electrochromic light adjustingmember (and the light transmitting electrically conductive glass film and the electrochromic light adjusting element) of the present invention is excellent in responsiveness of the electrochromic light adjusting layer and in energy conservation because the light transmitting electrically conductive layer has low resistance. In addition, the electrochromic light adjusting member of the present invention includes the glass film, thereby having scratch resistance and barrier properties comparable to those of a glass plate, and hence has high reliability. Specifically, the electrochromic light adjusting member of the present invention has high reliability by avoiding a defect that may occur when a resin film is used as a base material (e.g., a defect such as an external appearance failure due to the influence of an environmental factor, such as moisture) . Further, the glass film is excellent in flexibility, and hence enables the electrochromic light adjusting member to be produced in a roll-to-roll manner, leading to an improvement in productivity.

### Brief Description of Drawings

FIG. **1** is a schematic cross-sectional view of an electrochromic light adjusting member according to one embodiment of the present invention.
FIG. **2** is a schematic plan view of a light transmitting electrically conductive glass film according to one embodiment of the present invention.
FIG. **3** is a schematic cross-sectional view of an electrochromic light adjusting element according to one embodiment of the present invention.

### Description of Embodiments

Exemplary embodiments of the present invention are described below. However, the present invention is not limited to these embodiments.

### A. Entire Configuration of Electrochromic (EC) Light Adjusting Member

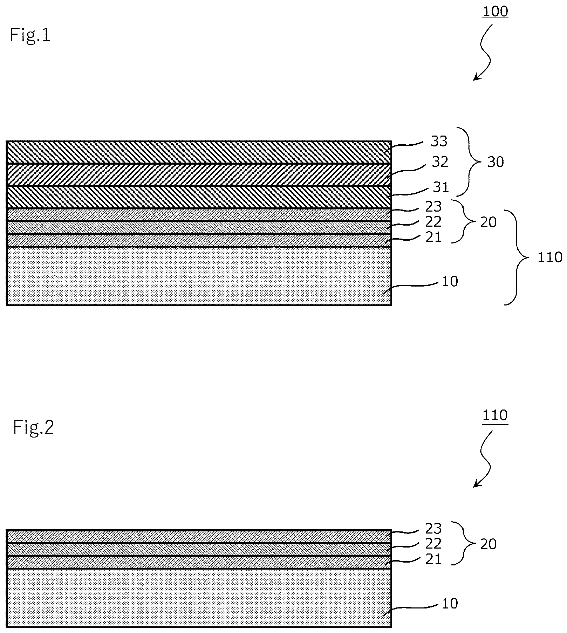

FIG. **1** is a schematic cross-sectional view of an electrochromic light adjusting member (hereinafter sometimes referred to as EC light adjusting member) according to one embodiment of the present invention. An EC light adjusting member **100** according to this embodiment includes a glass film **10,** a light transmitting electrically conductive layer **20,** and an electrochromic light adjusting layer (hereinafter sometimes referred to as EC light adjusting layer) **30** in the stated order. In one embodiment, the EC light adjusting member **100** consists only of the glass film **10,** the light transmitting electrically conductive layer **20,** and the EC light adjusting layer **30.** In addition, the glass film **10** and the light transmitting electrically conductive layer **20** constitute a light transmitting electrically conductive glass film **110.** The light transmitting electrically conductive glass film **110** may function as an electrode in an electrochromic light adjusting element to which the EC light adjusting member is applied.

The light transmitting electrically conductive layer **20** includes a first indium-based electrically conductive oxide layer **21,** a metal layer **22,** and a second indium-based electrically conductive oxide layer **23** in the stated order from a glass film 10 side.

In the present invention, the first indium-based electrically conductive oxide layer and the second indium-based electrically conductive oxide layer laminated through the intermediation of the metal layer are arranged, and hence a light transmitting electrically conductive layer having low resistance is formed. The formation of such light transmitting electrically conductive layer improves the responsiveness of the electrochromic light adjusting layer. In addition, an EC light adjusting member with less energy consumption can be obtained. Further, the EC light adjusting member including the light transmitting electrically conductive layer is also excellent in light transmission property.

In addition, by virtue of laminating the first indium-based electrically conductive oxide layer and the second indium-based electrically conductive oxide layer through the intermediation of the metal layer, even when the metal layer has a high visible light reflectance (e.g., a reflectance at a wavelength of 550 nm of 15% or more, or even 30% or more), a light transmitting electrically conductive layer having a high visible light transmittance (consequently, an EC light adjusting member having a high visible light transmittance) is formed.

Further, in the EC light adjusting member of the invention of the present application, a glass film is used as a base material. The glass film is hardly affected by the adverse influence of an environmental factor, and hence the EC light adjusting member is excellent in reliability and can be suitably used even for a product to be used under severe conditions.

### B. Glass Film

The glass film may function as a supporting material for securing mechanical strength of the EC light adjusting member. The glass film may be part of an electrode substrate included in an electrochromic light adjusting element to which the EC light adjusting member is applied.

As the glass film, one obtained by any appropriate production method may be used. The glass film is typically produced by melting a mixture containing a main raw material, such as silica or alumina, an anti-bubbling agent, such as mirabilite or antimony oxide, and a reducing agent, such as carbon, at a temperature of from 1, 400°C to 1, 600°C, and forming the molten mixture into a thin plate shape, followed by cooling.

As a method for the forming of the glass film, there are given, for example, a slot down-draw method, a fusion method, and a float method. Of those, a glass film formed by a fusion method does not have a surface contaminated with tin or the like as in the case of being formed by a float method, and hence does not need to be subjected to polishing treatment, and besides, can secure surface smoothness and thinning. From those viewpoints, the fusion method is preferably used.

The thickness of the glass film is preferably from 20 µm to 200 µm, more preferably from 50 µm to 150 µm. When the thickness falls within such range, there can be obtained an electrochromic light adjusting member which is excellent in flexibility and for which a roll-to-roll process is easily adopted.

The Young's modulus Eg of the glass film at 23°C, which is generally about 70 GPa, is preferably from 50 GPa to 120 GPa, more preferably from 60 GPa to 80 GPa, still more preferably from 65 GPa to 75 GPa. The "Young's modulus" refers to a value calculated from the slope of the maximum tangent in a stress-strain (S-S) curve obtained by pulling a strip-shaped sample measuring 10 mm in its widthwise direction at 23°C, a chuck-to-chuck distance of 50 mm, and a rate of 300 mm/min.

The width of the glass film is preferably from 50 mm to 2,000 mm, more preferably from 100 mm to 1,000 mm.

The glass film is preferably a glass ribbon having an elongate shape. In the case of having an elongate shape, its length is preferably 100 m or more, more preferably 500 m or more.

The bending stress of a glass roll at 23°C is preferably 20 GPa or more.

In one embodiment, a glass base material with a resin film may be used in place of the glass film. The glass base material with a resin film has a configuration in which a resin film is laminated on the glass film. The glass film and the resin film may be laminated through the intermediation of any appropriate pressure-sensitive adhesive or adhesive. The glass base material with a resin film has an advantage of being excellent in strength and more suitable for a roll-to-roll process.

The resin film is formed of any appropriate resin material. Examples of the resin include polyethylene, polyvinyl chloride, polyethylene terephthalate, polyvinylidene chloride, polypropylene, polyvinyl alcohol, polyester, polycarbonate, polystyrene, polyacrylonitrile, an ethylene-vinyl acetate copolymer, an ethylene-vinyl alcohol copolymer, an ethylene-methacrylic acid copolymer, nylon, cellophane, and a silicone resin.

The width of the resin film is preferably from 1% to 20%, more preferably from 3% to 15% with respect to the width of the glass film. In addition, when the entire surface of the glass film is to be reinforced, the width of the resin film is preferably from 80% to 110%, more preferably from 90% to 100% with respect to the width of the glass film.

The Young's modulus of the resin film is preferably from 0.1 GPa to 20 GPa, more preferably from 0.5 GPa to 10 GPa, still more preferably from 2 GPa to 5 GPa.

The thickness of the resin film is not particularly limited, and is preferably from 2 µm to 200 µm, more preferably from 10 µm to 150 µm, still more preferably from 20 µm to 100 µm.

The product of the Young's modulus (GPa) of the resin film at 23°C and its thickness (µm) is preferably 100×10³ pa·m or more.

The length of the resin film may be set to any appropriate length depending on the length of the glass film.

### C. Light Transmitting Electrically Conductive Layer

The light transmitting electrically conductive layer may be part of an electrode substrate included in an electrochromic light adjusting element to which the EC light adjusting member is applied, and has a function of electrically conducting an electric current from an external power source to the EC light adjusting layer.

As described above, the light transmitting electrically conductive layer includes the first indium-based electrically conductive oxide layer (hereinafter sometimes abbreviated as first oxide layer), the metal layer, and the second indium-based electrically conductive oxide layer (hereinafter sometimes abbreviated as second oxide layer) in the stated order from the glass film side. In one embodiment, the light transmitting electrically conductive layer is formed only of the first oxide layer, the metal layer, and the second oxide layer.

The surface resistance value R of the light transmitting electrically conductive layer is, for example, 50 Ω/□ or less, preferably 30 Ω/□ or less, more preferably 20 Ω/□ or less, still more preferably 15 Ω/□ or less, and is, for example, 0.1 Ω/□ or more, preferably 1 Ω/□ or more, more preferably 5 Ω/□ or more. The surface resistance value of the light transmitting electrically conductive layer may be measured, for example, in conformity with a four point probe method of JIS K7194 (1994) for four points on the surface of the light transmitting electrically conductive layer of the light transmitting electrically conductive glass film **110.**

The specific resistance of the light transmitting electrically conductive layer is, for example, 2. 5×10⁻⁴ Ω·cm or less, preferably 2.0×10⁻⁴ Ω·cm or less, more preferably 1.1×10⁻⁴ Ω·cm or less, and is, for example, 0.01×10⁻⁴ Ω·cm or more, preferably 0.1×10⁻⁴ Ω·cm or more, more preferably 0.5×10⁻⁴ Ω·cm or more. The specific resistance of the light transmitting electrically conductive layer is calculated using the thickness of the light transmitting electrically conductive layer and the surface resistance value of the light transmitting electrically conductive layer.

The thickness of the light transmitting electrically conductive layer is, for example, 20 nm or more, preferably 40 nm or more, more preferably 60 nm or more, still more preferably 80 nm or more, and is, for example, 150 nm or less, preferably 120 nm or less, more preferably 100 nm or less.

### C-1. First Indium-based Electrically Conductive Oxide Layer (First Oxide Layer)

The first indium-based electrically conductive oxide layer (first oxide layer), along with the metal layer and the second indium-based electrically conductive oxide layer (second oxide layer), is an electrically conductive layer configured to impart electrically conductive properties to the light transmitting electrically conductive layer. In addition, the first oxide layer, along with the second oxide layer, is also an optically adjusting layer for suppressing the visible light reflectance of the metal layer and improving the visible light transmittance of the light transmitting electrically conductive layer.

The first oxide layer contains an indium oxide (In₂O₃) as an electrically conductive oxide. An indium oxide doped with a metal atom may be used as the electrically conductive oxide. An example of the metal atom is at least one kind of metal atom selected from the group consisting of Sn, Zn, Ga, Sb, Ti, Si, Zr, Mg, Al, Au, Ag, Cu, Pd, and W.

Examples of the electrically conductive oxide in the first oxide layer that are preferred from the viewpoints of low resistance and transparency include an indium-tin composite oxide (ITO), an indium-gallium composite oxide (IGO), and an indium-gallium-zinc composite oxide (IGZO). Of those, ITO is more preferred.

The content of tin oxide (SnO₂) in ITO with respect to the total amount of tin oxide and indium oxide is, for example, 0.5 mass% or more, preferably 3 mass% or more, more preferably 6 mass% or more, still more preferably 8 mass% or more, particularly preferably 10 mass% or more, and is, for example, 35 mass% or less, preferably 20 mass% or less, more preferably 15 mass% or less, still more preferably 13 mass% or less. The content of indium oxide is the balance remaining after subtracting the content of tin oxide. When the content of tin oxide in ITO is set to fall within the suitable range, a change in film quality of an ITO film over time is easily suppressed.

The electrically conductive oxide in the first oxide layer may be crystalline or amorphous . From the viewpoint of uniform formation of the metal layer, the electrically conductive oxide is preferably amorphous. That is, the first oxide layer is preferably an amorphous film, and is more preferably an amorphous ITO film. Herein, a case in which the area ratio of crystal grains in a plane TEM image at 25,000× is 80% or less (preferably 0% or more and 50% or less) is defined as amorphous, and a case in which the area ratio is more than 80% is defined as crystalline.

In the first oxide layer, the content ratio of the electrically conductive oxide (preferably ITO) is, for example, 95 mass% or more, preferably 98 mass% or more, more preferably 99 mass% or more, and is, for example, 100 mass% or less.

The thickness of the first oxide layer is, for example, 5 nm or more, preferably 20 nm or more, more preferably 30 nm or more, and is, for example, 60 nm or less, preferably 50 nm or less. When the thickness of the first oxide layer falls within the above-mentioned range, the visible light transmittance of the light transmitting electrically conductive layer is easy to adjust to a high level. The thickness of the first oxide layer is measured by, for example, cross-sectional observation with a transmission electron microscope (TEM).

### C-2. Metal Layer

The metal layer, along with the first oxide layer and the second oxide layer, is an electrically conductive layer configured to impart electrically conductive properties to the light transmitting electrically conductive layer. In addition, the metal layer is also a resistance reduction layer configured to lower the surface resistance value of the light transmitting electrically conductive layer.

The metal layer is formed of any appropriate metal. An example of the metal is one kind of metal selected from the group consisting of Ti, Si, Nb, In, Zn, Sn, Au, Ag, Cu, Al, Co, Cr, Ni, Pb, Pd, Pt, Cu, Ge, Ru, Nd, Mg, Ca, Na, W, Zr, Ta, and Hf. In addition, an alloy containing two or more kinds of those metals may be used.

Preferred examples of the metal include silver (Ag) and a silver alloy. Of those, a silver alloy is more preferred. When silver or the silver alloy is used, a light transmitting electrically conductive layer having a small resistance value and having a particularly high average reflectance in a near-infrared region can be formed. An electrochromic light adjusting member including such light transmitting electrically conductive layer is suitable even for an application of being used outdoors or for a window. The average reflectance of the light transmitting electrically conductive glass film for near-infrared rays (wavelength: from 850 nm to 2,500 nm) is, for example, 10% or more, preferably 20% or more, more preferably 50% or more, and is, for example, 95% or less, preferably 90% or less.

Examples of the silver alloy include a Ag-Cu alloy, a Ag-Pd alloy, a Ag-Sn alloy, a Ag-In alloy, a Ag-Pd-Cu alloy, a Ag-Pd-Cu-Ge alloy, a Ag-Cu-Au alloy, a Ag-Cu-Sn alloy, a Ag-Cu-In alloy, a Ag-Ru-Cu alloy, a Ag-Ru-Au alloy, a Ag-Nd alloy, a Ag-Mg alloy, a Ag-Ca alloy, and a Ag-Na alloy. The silver alloy is preferably, for example, a Ag-Cu alloy, a Ag-Cu-In alloy, a Ag-Cu-Sn alloy, a Ag-Pd alloy, or a Ag-Pd-Cu alloy from the viewpoints of low resistance and moist heat durability.

In the silver alloy, the content ratio of silver is, for example, 80 mass% or more, preferably 90 mass% or more, more preferably 95 mass% or more, and is, for example, 99.9 mass% or less. The content ratio of other metals in the silver alloy is the balance remaining after subtracting the content ratio of silver.

The thickness of the metal layer is, for example, 1 nm or more, preferably 5 nm or more, and is, for example, 20 nm or less, preferably 10 nm or less. When the thickness falls within such range, a light transmitting electrically conductive layer excellent in light transmission property can be formed. The thickness of the metal layer is measured by, for example, cross-sectional observation with a transmission electron microscope (TEM) .

### C-3. Second Indium-based Electrically Conductive Oxide Layer (Second Oxide Layer)

The second indium-based electrically conductive oxide layer (second oxide layer), along with the first oxide layer and the metal layer, is an electrically conductive layer configured to impart electrically conductive properties to the light transmitting electrically conductive layer. In addition, the second oxide layer is also an optically adjusting layer for suppressing the visible light reflectance of the metal layer and improving the visible light transmittance of the light transmitting electrically conductive layer.

The second oxide layer contains an indium oxide (In₂O₃) as an electrically conductive oxide. The electrically conductive oxide for forming the second oxide layer is, for example, the electrically conductive oxide exemplified in the section C-1, preferably ITO. In addition, the second oxide layer is preferably an amorphous film, more preferably an amorphous ITO film.

In the second oxide layer, the content ratio of the electrically conductive oxide (preferably ITO) is, for example, 95 mass% or more, preferably 98 mass% or more, more preferably 99 mass% or more, and is, for example, 100 mass% or less.

The thickness of the second oxide layer is, for example, 5 nm or more, preferably 20 nm or more, more preferably 30 nm or more, and is, for example, 60 nm or less, preferably 50 nm or less. When the thickness of the second oxide layer falls within the above-mentioned range, the visible light transmittance of the light transmitting electrically conductive layer is easy to adjust to a high level. The thickness of the second oxide layer is measured by, for example, cross-sectional observation with a transmission electron microscope (TEM).

The ratio of the thickness of the second oxide layer to the thickness of the first oxide layer (thickness of second oxide layer/thickness of first oxide layer) is, for example, 0.5 or more, preferably 0.75 or more, and is, for example, 1.5 or less, preferably 1.25 or less.

The ratio of the thickness of the second oxide layer to the thickness of the metal layer (thickness of second oxide layer/thickness of metal layer) is, for example, 2.0 or more, preferably 3.0 or more, and is, for example, 10 or less, preferably 8.0 or less.

### D. EC Light Adjusting Layer

The EC light adjusting layer is a light adjusting layer configured to change a light transmittance and a color with an electric current electrically conducted via the light transmitting electrically conductive layer.

In one embodiment, as illustrated in FIG. **1****,** the EC light adjusting layer **30** includes a first electrochromic compound layer (hereinafter sometimes referred to as first EC layer) **31,** an electrolyte layer **32,** and a second electrochromic compound layer (hereinafter sometimes referred to as second EC layer) **33** in the stated order from a light transmitting electrically conductive layer **20** side.

The thickness of the EC light adjusting layer is, for example, 0.1 µm or more and 5,000 µm or less.

### D-1. First Electrochromic Compound Layer (First EC Layer)

The first EC layer, along with the second EC layer, is a light adjusting layer configured to change its light transmittance and color in accordance with an electric current flowing in the first EC layer.

The first EC layer is formed of any appropriate electrochromic compound. Examples of the electrochromic compound include: inorganicelectrochromic compounds, such as tungsten oxide, molybdenum oxide, vanadium oxide, indium oxide, iridium oxide, nickel oxide, and Prussian blue; and organic electrochromic compounds, such as a phthalocyanine-based compound, a styryl-based compound, a viologen-based compound, polypyrrole, polyaniline, and polythiophene.

The thickness of the first EC layer is, for example, 0.01 µm or more and 3,000 µm or less.

### D-2. Electrolyte Layer

The electrolyte layer is a layer for efficiently achieving electrical conduction to the electrochromic compounds forming the first EC layer and the second EC layer.

The electrolyte layer may be formed of a liquid electrolyte and a sealing material for sealing the liquid electrolyte, or may be formed of a solid electrolyte film.

The electrolyte for forming the electrolyte layer is not limited, and examples thereof include alkali metal salts or alkaline earth metal salts, such as LiClO₄, LiBF₄, LiAsF₆, LiPF₆, LiCF₃SO₃, LiCF₃COO, KCl, NaClO₃, NaCl, NaBF₄, NaSCN, KBF₄, Mg(ClO₄)₂, and Mg(BF₄)₂. The examples also include quaternary ammonium salts and quaternary phosphonium salts.

When the liquid electrolyte is used as the electrolyte layer, an organic solvent is preferably used in combination with the electrolyte. The organic solvent is not limited as long as the electrolyte can be dissolved therein, and examples thereof include: carbonates, such as ethylene carbonate, propylene carbonate, and methyl carbonate; furans, such as tetrahydrofuran; and γ-butyrolactone, 1,2-dimethoxyethane, 1,3-dioxolane, 4-methyl-1,3-dioxolane, methyl formate, methyl acetate, methyl propionate, acetonitrile, and N,N-dimethylformamide.

The thickness of the electrolyte layer is, for example, 0.01 µm or more and 3,000 µm or less.

### D-3. Second Electrochromic Compound Layer (Second EC Layer)

The second EC layer, along with the first EC layer, is a light adjusting layer configured to change its light transmittance and color in accordance with an electric current flowing in the second EC layer.

The second EC layer is formed of any appropriate electrochromic compound. The electrochromic compound is not particularly limited, and the electrochromic compound exemplified in the section D-1 may be used.

The thickness of the second EC layer is, for example, 0.01 µm or more and 3,000 µm or less.

### E. Light Transmitting Electrically Conductive Glass Film

FIG. **2** is a schematic plan view of a light transmitting electrically conductive glass film according to one embodiment of the present invention. The light transmitting electrically conductive glass film **110** according to this embodiment includes the glass film **10** and the light transmitting electrically conductive layer **20** arranged on one side of the glass film **10**. In one embodiment, the light transmitting electrically conductive film **110** is formed only of the glass film **10** and the light transmitting electrically conductive layer **20.**

The details of the glass film are as described in the section B.

The details of the light transmitting electrically conductive layer are as described in the section C. That is, the light transmitting electrically conductive glass film **110** includes the first indium-based electrically conductive oxide layer **21,** the metal layer **22,** and the second indium-based electrically conductive oxide layer **23** in the stated order from the glass film **10** side.

The thickness of the light transmitting electrically conductive glass film is, for example, 20 µm or more, preferably 50 µm or more, and is, for example, 200 µm or less, preferably 150 µm or less.

The visible light transmittance of the light transmitting electrically conductive glass film is, for example, 60% or more, preferably 80% or more, more preferably 85% or more, and is, for example, 95% or less. In the present invention, by virtue of arranging the metal layer between the first oxide layer and the second oxide layer, even when the metal layer has a high visible light reflectance, a light transmitting electrically conductive glass film having a high visible light transmittance can be obtained.

### F. Production Method for EC Light Adjusting Member

The EC light adjusting member may be produced by any appropriate method. A typical example of the production method for the EC light adjusting member is described below.

In the production of the EC light adjustingmember, first, the light transmitting electrically conductive glass film is produced, and then the EC light adjusting layer is formed on the light transmitting electrically conductive glass film.

The light transmitting electrically conductive glass film is obtained by forming the first oxide layer, the metal layer, and the second oxide layer on the glass film. Any appropriate method may be adopted as a method of forming each of those layers. In one embodiment, a dry process is used. More specifically, examples of the dry process include a vacuum deposition method, a sputtering method, and an ion plating method. Of those, a sputtering method, such as a magnetron sputtering method, is preferably used.

As a gas to be used in the sputtering method, there is given, for example, an inert gas, such as Ar. In addition, as required, a reactive gas, such as oxygen, may be used in combination therewith. When the reactive gas is used in combination, the flow rate ratio of the reactive gas is not particularly limited, and the ratio of the flow rate of the reactive gas to the flow rate of the inert gas is, for example, 0.1/100 or more, preferably 1/100 or more, and is, for example, 5/100 or less. In one embodiment, in the formation of the first oxide layer, it is preferred to use, as the gas, the inert gas and the reactive gas in combination. In the formation of the metal layer, it is preferred to use, as the gas, the inert gas alone. In the formation of the second oxide layer, it is preferred to use, as the gas, the inert gas and the reactive gas in combination.

When the sputtering method is adopted, a target material is, for example, the above-mentioned inorganic oxide or metal for forming each layer.

A power source to be used in the sputtering method is not limited, and examples thereof include a DC power source, an MF/AC power source, and an RF power source, which are used alone or in combination thereof. Of those, a DC power source is preferred.

The light transmitting electrically conductive layer may be, as required, formed into a pattern shape, such as a wiring pattern, by etching.

A known material may be used for the EC light adjusting layer. The EC light adjusting layer is arranged on the upper surface of the light transmitting electrically conductive glass film so that the EC light adjusting layer and the second indium-based electrically conductive oxide layer are brought into contact with each other. Thus, the EC light adjusting member is obtained. The production method may be performed in a roll-to-roll manner. In addition, part or the whole of the production method may be performed in a batch manner.

### G. Electrochromic Light Adjusting Element

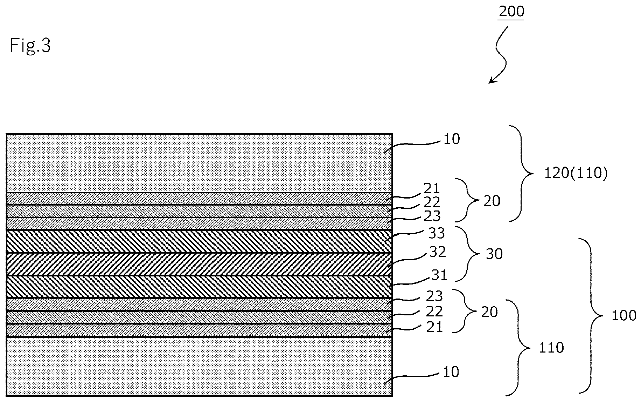

FIG. **3** is a schematic cross-sectional view of an electrochromic light adjusting element (EC light adjusting element) according to one embodiment of the present invention. An EC light adjusting element **200** according to this embodiment includes the EC light adjusting member **100** and an electrode substrate (upper electrode substrate) **120** arranged on one side of the EC light adjusting member **100.** The EC light adjusting member described in the section A to the section D may be used as the EC light adjusting member **100.** The electrode substrate **120** may be arranged on an EC light adjusting layer **30** side of the EC light adjusting member **100.** In one embodiment, the EC light adjusting element **200** consists only of the EC light adjusting member **100** and the electrode substrate **120.**

The light transmitting electrically conductive glass film **110** may be used as the electrode substrate **120.** That is, the electrode substrate **120** may include the light transmitting electrically conductive layer **20** and the glass film **10** in the stated order from the EC light adjusting member **100.** The EC light adjusting element **200** in which the electrode substrate **120** (light transmitting electrically conductive glass film **110**) is arranged as described above may have a configuration in which the EC light adjusting layer **30** is arranged between a pair of the light transmitting electrically conductive films **110.** As described above, the light transmitting electrically conductive glass film **110** arranged opposite to the electrode substrate **120** may function as the lower electrode of the EC light adjusting element.

The EC light adjusting element of the present invention has low resistance because the surface resistance value of the light transmitting electrically conductive layer is low. Accordingly, the EC light adjusting element of the present invention is excellent in terms of responsiveness of the EC light adjusting layer and energy conservation. In addition, the EC light adjusting element includes the glass film, thereby having scratch resistance and barrier properties comparable to those of a glass plate, and hence has high reliability. Specifically, the EC light adjusting element has high reliability by avoiding a defect that may occur when a resin film is used as a base material (e.g., a defect such as an external appearance failure due to the influence of an environmental factor, such as moisture) . Further, the glass film is excellent in flexibility, and hence enables the EC light adjusting element to be produced in a roll-to-roll manner, leading to an improvement in productivity.

### Examples

The present invention is more specifically described below by way of Example and Comparative Examples. The present invention is by no means limited to Example and Comparative Examples . In addition, specific numerical values, such as blending ratios (content ratios), physical property values, and parameters, used in the following description may be replaced with upper limit values (numerical values defined with "or less" or "less than") or lower limit values (numerical values defined with "or more" or "more than") in the descriptions of, for example, corresponding blending ratios (content ratios), physical property values, andparametersdescribed in "Description of Embodiments" above.

### [Example 1]

### (Preparation of Glass Film)

A glass film roll having a thickness of 100 µm was prepared.

### (Formation of First Indium-based Electrically Conductive Oxide Layer (First Oxide Layer))

Next, the glass film roll was placed in a vacuum sputtering apparatus, followed by evacuation until a pressure at the time of non-conveyance became 4 × 10⁻³ Pa (degassing treatment) . At this time, under a state in which sputtering gases (Ar and O₂) were not introduced, part of the glass film was conveyed to confirm that the pressure was increased to 2×10⁻² Pa. Thus, it was confirmed that a sufficient amount of gas remained in the glass film roll.

Next, while the glass film roll was delivered, a first indium-based electrically conductive oxide layer formed of amorphous ITO and having a thickness of 40 nm was formed on the upper surface of the glass film by sputtering. Specifically, under a vacuum atmosphere having a pressure of 0.3 Pa into which Ar and O₂ had been introduced (flow rate ratio: Ar:O₂=100:1.4), a target formed of a sintered body of 12 mass% of tin oxide and 88 mass% of indium oxide was sputtered using a direct-current (DC) power source.

### (Formation of Metal Layer)

A metal layer formed of a Ag-Cu alloy and having a thickness of 8 nm was formed on the upper surface of the first indium-based electrically conductive oxide layer by sputtering. Specifically, under a vacuum atmosphere having a pressure of 0.3 Pa into which Ar had been introduced, a Ag alloy (manufactured by Mitsubishi Materials Corporation, product number: "No. 317") was sputtered using, as a power source, a direct-current (DC) power source.

### (Formation of Second Indium-based Electrically Conductive Oxide Layer (Second Oxide Layer))

A second indium-based electrically conductive oxide layer formed of amorphous ITO and having a thickness of 38 nm was formed on the upper surface of the metal layer by sputtering. Specifically, under a vacuum atmosphere having a pressure of 0.4 Pa into which Ar and O₂ had been introduced (flow rate ratio: Ar:O₂=100:1.5), a target formed of a sintered body of 12 mass% of tin oxide and 88 mass% of indium oxide was sputtered using a direct-current (DC) power source.

Through the operations described above, a light transmitting electrically conductive glass film was obtained in which the first indium-based electrically conductive oxide layer, the metal layer, and the second indium-based electrically conductive oxide layer were formed in the stated order on the glass film.

The resultant light transmitting electrically conductive glass film was heated under an air atmosphere under the conditions of 140°C and 30 minutes.

### [Comparative Example 1]

A light transmitting electrically conductive glass film was obtained in the same manner as in Example 1 except that: the thickness of the first indium-based electrically conductive oxide layer was changed to 30 nm; and the metal layer and the second indium-based electrically conductive oxide layer were not formed.

### [Comparative Example 2]

A light transmitting electrically conductive glass film was obtained in the same manner as in Example 1 except that: the thickness of the first indium-based electrically conductive oxide layer was changed to 100 nm; and the metal layer and the second indium-based electrically conductive oxide layer were not formed.

### [Evaluation]

The resultant light transmitting electrically conductive glass films were subjected to the following evaluations. The results are shown in Table 1.

### (1) Surface Resistance Value of Light Transmitting Electrically Conductive Layer

The initial surface resistance value R₀ of the light transmitting electrically conductive layer was measured in conformity with a four point probe method of JIS K7194 (1994) . The results are shown in Table 1.

### (2) Visible Light Transmittance

The total light transmittance of each of the light transmitting electrically conductive glass films was measured using a haze meter (manufactured by Suga Test Instruments Co., Ltd., apparatus name: "HGM-2DP), and was adopted as the visible light transmittance thereof.

### (3) Responsiveness

An EC light adjusting element measuring 500 mm×500 mm was produced as described below using each of the light transmitting electrically conductive glass films obtained in Example and Comparative Examples. An electric current was caused to flow in the resultant EC light adjusting element, and a period of time required for the color change of the EC light adjusting layer was measured. A case in which the period of time required for the color change of the EC light adjusting layer was 60 seconds or less was evaluated as "○", and a case in which the period of time was more than 60 seconds was evaluated as "×".

### (Production of EC Light Adjusting Element)

An EC light adjusting element was produced by preparing two of the light transmitting electrically conductive glass films obtained in Example 1 and using the two films as an upper electrode substrate and a lower electrode substrate of the EC light adjusting element. Specifically, the EC light adjusting element was produced by laminating the light transmitting electrically conductive glass films on both surfaces of a commercially available EC light adjusting layer (electrochromic compound layer/electrolyte layer/electrochromic compound layer).

Also for Comparative Examples 1 and 2, the light transmitting electrically conductive glass films obtained in these experimental examples were used to produce EC light adjusting elements in the same manner as described above.

**Table 1**

| | Thickness of first oxide layer (µm) | Thickness of metal layer (µm) | Thickness of second oxide layer (µm) | Resistance value (Ω/□) | Responsiveness | Transmittance (%) |
|---|---|---|---|---|---|---|
| Example 1 | 40 | 8 | 38 | 9 | ○ | 92 |
| Comparative Example 1 | 30 | - | - | 30 | × | 89 |
| Comparative Example 2 | 150 | - | - | 10 | ○ | 80 |

### Industrial Applicability

The optical laminate of the present invention is suitably used for an electric current-driven light adjusting apparatus.

### Reference Signs List

**10** glass film
**20** light transmitting electrically conductive layer
**21** first indium-based electrically conductive oxide layer (first oxide layer)
**22** metal layer
**23** second indium-based electrically conductive oxide layer (second oxide layer)
**30** electrochromic light adjusting layer (EC light adjusting layer)
**31** first electrochromic compound layer (first EC layer)
**32** electrolyte layer
**33** second electrochromic compound layer (second EC layer)
**100** electrochromic light adjusting member (EC light adjusting member)
**110** light transmitting electrically conductive glass film
**200** electrochromic light adjusting element

## Claims

1. An electrochromic light adjusting member, comprising in this order:
a glass film;
a light transmitting electrically conductive layer; and
an electrochromic light adjusting layer,
wherein the light transmitting electrically conductive layer includes a first indium-based electrically conductive oxide layer, a metal layer, and a second indium-based electrically conductive oxide layer in the stated order from a glass film side.

2. The electrochromic light adjusting member according to claim 1, wherein the light transmitting electrically conductive layer has a surface resistance value of 50 Ω/□ or less.

3. The electrochromic light adjusting member according to claim 1, wherein the first indium-based electrically conductive oxide layer and the second indium-based electrically conductive oxide layer are each an amorphous film.

4. The electrochromic light adjusting member according to claim 1, wherein the glass film has a thickness of from 20 µm to 200 µm.

5. A light transmitting electrically conductive glass film, comprising:
a glass film; and
a light transmitting electrically conductive layer arranged on one side of the glass film,
wherein the light transmitting electrically conductive layer includes a first indium-based electrically conductive oxide layer, a metal layer, and a second indium-based electrically conductive oxide layer in the stated order from a glass film side.

6. The light transmitting electrically conductive glass film according to claim 5, wherein the light transmitting electrically conductive glass film is used for the electrochromic light adjusting member of claim 1.

7. An electrochromic light adjusting element, comprising:
the electrochromic light adjusting member of claim 1; and
an electrode substrate,
wherein the electrode substrate is arranged on an electrochromic light adjusting layer side of the electrochromic light adjusting member.
